(19) Europäisches Patentamt / European Patent Office / Office européen des brevets

(11) **EP 4 769 499 A1**

(12) **EUROPEAN PATENT APPLICATION**
published in accordance with Art. 153(4) EPC

(43) Date of publication:
**01.07.2026 Bulletin 2026/27**

(21) Application number: **25822355.1**

(22) Date of filing: **10.06.2025**

(51) International Patent Classification (IPC):
**H01M 4/04** *(2006.01)*    **B05D 1/36** *(2006.01)*
**B05D 5/00** *(2006.01)*    **H01M 4/02** *(2006.01)*

(52) Cooperative Patent Classification (CPC):
**B05D 1/36; B05D 5/00; H01M 4/02; H01M 4/04;**
**Y02E 60/10**

(86) International application number:
**PCT/KR2025/007848**

(87) International publication number:
**WO 2025/258946 (18.12.2025 Gazette 2025/51)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **10.06.2024 KR 20240074674**

(71) Applicant: **LG Energy Solution, Ltd.**
**Seoul 07335 (KR)**

(72) Inventors:
• **CHOI, Min Hyuck**
  **Daejeon 34122 (KR)**

• **LEE, Taek Soo**
  **Daejeon 34122 (KR)**
• **KIM, Guk Tae**
  **Daejeon 34122 (KR)**
• **KIM, Sang Min**
  **Daejeon 34122 (KR)**
• **MOON, Young Gyu**
  **Daejeon 34122 (KR)**
• **KIM, Min Cheol**
  **Daejeon 34122 (KR)**
• **PARK, Min Gu**
  **Daejeon 34122 (KR)**

(74) Representative: **Plasseraud IP**
**104 Rue de Richelieu**
**CS92104**
**75080 Paris Cedex 02 (FR)**

(54) **METHOD AND APPARATUS FOR MANUFACTURING ELECTRODE USING VOLATILE GUIDE LIQUID, AND ELECTRODE MANUFACTURED USING SAME**

(57)    A method for manufacturing electrode according to some embodiments includes: a guide liquid application step of applying a guide liquid defining an electrode slurry application region on the current collector sheet; an electrode slurry application step of applying electrode slurry onto the electrode slurry application region; and a drying step of drying the guide liquid and the electrode slurry, wherein the guide liquid can be evaporated by 85 to 95 wt% during the drying step. Some embodiments of the present disclosure can improve the edge profile of the electrode.

[FIG. 5]

APPLYING GUIDE LIQUID ON CURRENT COLLECTOR — P110

APPLYING ELECTRODE SLURRY ON CURRENT COLLECTOR — P120

DRYINH GUIDE LIQUID AND ELECTRODE SLURRY — P130

**Description**

[Technical field]

This application claims the benefit of Korean Patent Application No. 10-2024-0074674, filed on June 10, 2024, the disclosure of which is incorporated herein by reference.

The present disclosure relates to a method for manufacturing an electrode, a device for manufacturing an electrode, and an electrode, specifically concerning a method and device for manufacturing an electrode using a volatile guide liquid, and an electrode manufactured using the same.

[Background]

Interest in secondary batteries capable of long-term repeated use through recharging is growing to reduce dependence on fossil fuels and decrease carbon emissions. In particular, lithium secondary batteries, which utilize lithium ions, offer excellent energy density and lifespan. Consequently, lithium secondary batteries are used in various fields such as portable electronic devices, vehicles, and energy storage systems (ESS).

The electrodes applied to lithium secondary batteries include a current collector and an electrode active material layer coated on one or both sides of the current collector. The electrode active material layer is typically formed by applying an electrode slurry onto the current collector and then drying it. The electrode active material layer is manufactured by dispensing the fluid electrode slurry onto the current collector and drying it. During this process, a sliding phenomenon occurs at the edge portions of the electrode active material layer, causing a thickness reduction outward. To enhance electrode quality and increase capacity, a technique is required to control the angle at the edges of the electrode active material layer to be close to a right angle.

To achieve this, conventional methods have included applying insulating tape or coating an insulating layer onto the sliding region of the electrode active material layer. However, these methods suffer from the problem of residual components from the insulating tape or insulating layer remaining after drying. These residual components reduce the activity of the electrode active material layer, leading to a decrease in electrode capacity.

Therefore, there is a need for a new manufacturing method that can suppress the sliding phenomenon occurring in the sliding region of the electrode active material layer during electrode manufacturing while minimizing the reduction in electrode capacity.

[Summary]

[Technical Problem]

The present disclosure can suppress the sliding phenomenon occurring in the sliding region of the electrode active material layer while minimizing the reduction in electrode capacity.

[Technical Solution]

The method for manufacturing electrode according to the present disclosure includes: a guide liquid application step of applying a guide liquid defining an electrode slurry application region on the current collector sheet; an electrode slurry application step of applying electrode slurry onto the electrode slurry application region defined by the guide liquid; and a drying step of drying the guide liquid and the electrode slurry applied on the current collector sheet. In one embodiment, the guide liquid evaporates by at least 85 wt% during the drying step. Specifically, the guide liquid evaporates by 85 to 95 wt% during the drying step.

In one example, the guide liquid may include a solvent and a binder.

The solvent may include one or more among dimethyl sulfoxide, isopropyl alcohol, N-methylpyrrolidone, acetone, methyl acetate, ethyl acetate, $\gamma$-butyrolactone, $\varepsilon$-caprolactone, dibutyl ether, tetrahydrofuran, cyclohexanone, benzene, fluorobenzene, dimethyl carbonate, diethyl carbonate, methyl ethyl carbonate, ethyl methyl carbonate, ethylene carbonate, propylene carbonate, and water.

The binder may include one or more among polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, ethylene-propylene-diene terpolymer, sulfonated ethylene-propylene-diene terpolymer, styrene-butadiene rubber, and styrene-butadiene rubber-carboxymethyl cellulose fluororubber.

In one embodiment, the method for manufacturing electrode is a method for manufacturing positive electrode. In this case, the electrode slurry is a positive electrode slurry, and satisfies the following Equation 1.

[Equation 1]

$$150 \leq Vs1 - Vg1 \leq 7{,}000$$

In Equation 1,

Vs1 represents the viscosity of the positive electrode slurry measured at 25°C with a shear rate of 2.5/s, and is in the range of 5,000 to 30,000 cps,

Vg1 represents the viscosity (cps) of the guide liquid measured at 25°C with a shear rate of 2.5/s.

In another embodiment, the method for manufacturing electrode is a method for manufacturing negative electrode. In this case, the electrode slurry is a negative electrode slurry, and satisfies the following Equation 2.

[Equation 2]

$$100 \leq Vs2 - Vg2 \leq 4{,}500$$

In Equation 2,

Vs2 represents the viscosity of the negative electrode slurry measured at 25°C with a shear rate of 2.5/s, and is in the range of 2,000 to 6,000 cps,

Vg2 represents the viscosity (cps) of the guide liquid measured at 25°C with a shear rate of 2.5/s.

In one embodiment, the time interval (|T1-T3|) between the start time (T1) of the guide liquid application step and the completion time (T3) of the drying step is within the range of 300 seconds or less.

In another embodiment, the time interval (|T1-T2|) between the start time (T1) of the guide liquid application step and the start time (T2) of the electrode slurry application step is 3 seconds or less.

In another embodiment, the time interval (|T1-T2|) between the start time (T1) of the guide liquid application step and the start time (T2) of the electrode slurry application step is more than 3 seconds and 20 seconds or less.

The present disclosure provides a manufacturing device for instantiating the method for manufacturing electrode described above. In one embodiment, the device for manufacturing electrode according to the present disclosure includes: a coating part that applies a guide liquid that defines an electrode slurry application region on a current collector sheet and applies an electrode slurry to the electrode slurry application region; and a drying part that dries the guide liquid and the electrode slurry. In one embodiment, the viscosity of the guide liquid is controlled to be lower than the viscosity of the electrode slurry.

In one embodiment, the coating part includes a first coating die and a second coating die. The first coating die applies the guide liquid onto the current collector sheet, and the second coating die applies the electrode slurry onto the current collector sheet.

In another embodiment, the coating part includes a single coating die that simultaneously applies the guide liquid and the electrode slurry onto the current collector sheet.

The present disclosure provides an electrode manufactured through the method for manufacturing electrode or device for manufacturing electrode described above. In one embodiment, the electrode according to the present disclosure includes: a current collector and an electrode active material layer formed on one or both surfaces of the current collector. In addition, the electrode active material layer includes a flat part and a sliding part formed at the edge of the flat part. The sliding angle of the sliding part is within the range of 45° to 90°.

[Advantageous Effects]

Some embodiments of the present disclosure may improve the edge profile of the electrode. Furthermore, some embodiments of the present disclosure may avoid reducing the conductivity of the electrode.

The present disclosure can suppress the sliding phenomenon occurring in the sliding region of the electrode active material layer while minimizing the reduction in electrode capacity.

[Brief Description of the Drawings]

FIG. 1 is a schematic diagram showing a device for manufacturing electrode according to some embodiments.

FIG. 2 is a top view of FIG. 1.

FIG. 3 is a schematic diagram showing a device for manufacturing electrode according to other embodiments.

FIG. 4 is a top view of FIG. 3.

FIG. 5 is a flowchart for explaining a method for manufacturing electrode according to some embodiments.

FIG. 6 is a cross-sectional view taken along the section line 4I-4I' in FIG. 4.

FIG. 7 is a cross-sectional view taken along the section line 4II-4II' in FIG. 4.

FIG. 8 is a cross-sectional view taken along the section line 4III-4III' in FIG. 4.

FIG. 9 is a cross-sectional view taken along the section line 4IV-4IV' in FIG. 4.

FIG. 10 is a schematic diagram showing an electrode according to some embodiments.

[Best Mode for Carrying out the Invention]

The terms and words used in this specification should not be interpreted as limited to their conventional or dictionary meanings, but should be interpreted in accordance with the principle that the inventor may appropriately define the meanings of terms and words to describe his own invention in the best possible manner, so as to conform to the technical concept of the present disclosure.

In this specification, terms such as "include" or "have" are intended to designate the presence of the features, numbers, steps, operations, components, parts, or combinations thereof described in the specification, and should not be understood as precluding the presence or possibility of one or more other features, numbers, steps, operations, components, parts, or combinations thereof. Furthermore, when a part such as a layer, film, area, or plate is described as being "on" another part, this includes not only cases where it is directly above the other part but also cases where there is another part in between. Conversely, when a part such as a layer, film, area, or plate is described as being "under" another part, this includes not only cases where it is directly below the other part but also cases where there is another part in between.

The method for manufacturing electrode according to the present disclosure includes: a guide liquid application step of applying a guide liquid defining an electrode slurry application region on the current collector sheet; an electrode slurry application step of applying electrode slurry onto the electrode slurry application region defined by the guide liquid; and a drying step of drying the guide liquid and the electrode slurry applied on the current collector sheet. In one example, the guide liquid evaporates by at least 85 wt% during the drying step. Specifically, the guide liquid evaporates by 85 to 95 wt% during the drying step. In the present disclosure, by forming the guide liquid with highly volatile components, the sliding phenomenon of the electrode slurry is suppressed while simultaneously volatilizing most of the guide liquid components during the drying process, thereby minimizing residual components.

In one example, the guide liquid may include a solvent and a binder. In the present disclosure, the guide liquid may also be composed solely of a solvent. However, by including a certain level of binder in the guide liquid, the viscosity of the guide liquid can be increased. This allows for more effective suppression of the sliding phenomenon of the electrode slurry. In the guide liquid, the content ratio of the solvent to the binder, based on weight ratio, may be in the range of 80:20 to 98:2. More specifically, the content ratio of solvent to binder may be in the range of 85:15 to 95:5, 90:10 to 95:5, 85:15 to 90:10, or 88:12 to 92:8. Within the above content ranges, if the binder content becomes too high, the ion conductivity may decrease as the binder content remaining on the current collector surface increases. Conversely, if the binder content becomes too low, the viscosity of the guide liquid may not reach the desired level, and it may not sufficiently suppress the sliding phenomenon of the electrode slurry.

The solvent may include one or more among dimethyl sulfoxide, isopropyl alcohol, N-methylpyrrolidone, acetone, methyl acetate, ethyl acetate, γ-butyrolactone, ε-caprolactone, dibutyl ether, tetrahydrofuran, cyclohexanone, benzene, fluorobenzene, dimethyl carbonate, diethyl carbonate, methyl ethyl carbonate, ethyl methyl carbonate, ethylene carbonate, propylene carbonate, and water.

The binder may include one or more among polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, ethylene-propylene-diene terpolymer, sulfonated ethylene-propylene-diene terpolymer, styrene-butadiene rubber, and styrene-butadiene rubber-carboxymethyl cellulose fluororubber.

In one embodiment, the method for manufacturing electrode is a method for manufacturing positive electrode. In this case, the electrode slurry is a positive electrode slurry, and satisfies the following Equation 1.

[Equation 1]

$$150 \leq Vs1 - Vg1 \leq 7{,}000$$

In Equation 1,

Vs1 represents the viscosity of the positive electrode slurry measured at 25°C with a shear rate of 2.5/s, and is in the range of 5,000 to 30,000 cps,

Vg1 represents the viscosity (cps) of the guide liquid measured at 25°C with a shear rate of 2.5/s.

Specifically, the calculated value (cps) according to Equation 1 falls within the range of 150 to 7,000, 150 to 6,500, 2,500 to 7,000, 3,000 to 7,000, 3,000 to 6,500, 4,000 to 6,500, 4,500 to 6,500, or 4,500 to 5,500.

In another embodiment, the method of manufacturing the electrode is a method of manufacturing a negative electrode. In this case, the electrode slurry is a negative electrode slurry and satisfies the following Equation 2.

[Equation 2]

$$100 \leq Vs2 - Vg2 \leq 4{,}500$$

In Equation 2,

Vs2 represents the viscosity of the negative electrode slurry measured at 25°C with a shear rate of 2.5/s, and is in the range of 2,000 to 6,000 cps,

Vg2 represents the viscosity (cps) of the guide liquid measured at 25°C with a shear rate of 2.5/s.

Specifically, the calculated value (cps) according to Equation 2 falls within the ranges of 100 to 4,500, 200 to 4,500, 100 to 3,500, 1,000 to 4,500, 2,000 to 4,000, 1,000 to 3,500, 1,500 to 3,500, or 1,500 to 2,500.

In one embodiment, the time interval (|T1-T3|) between the start time (T1) of the guide liquid application step and the completion time (T3) of the drying step is within the range of 300 seconds or less.

In another embodiment, the time interval (|T1-T2|) between the start time (T1) of the guide liquid application step and the start time (T2) of the electrode slurry application step is 3 seconds or less. In this case, it may be when guide liquid and electrode slurry in a single coating die are simultaneously applied onto the current collector sheet.

In yet another embodiment, the time interval (|T1-T2|) between the start time (T1) of the guide liquid application step and the start time (T2) of the electrode slurry application step is greater than 3 seconds and 20 seconds or less. In this case, it may be a situation where guide liquid and electrode slurry in two coating dies are sequentially applied onto the current collector sheet.

The present disclosure provides a manufacturing device for instantiating the method for manufacturing electrode described above. In one embodiment, the device for manufacturing electrode according to the present disclosure includes: a coating part that applies a guide liquid that defines an electrode slurry application region on a current collector sheet and applies an electrode slurry to the electrode slurry application region; and a drying part that dries the guide liquid and the electrode slurry. In one embodiment, the viscosity of the guide liquid is controlled to be lower than the viscosity of the electrode slurry.

In one embodiment, the coating part includes a first coating die and a second coating die. The first coating die applies the guide liquid onto the current collector sheet, and the second coating die applies the electrode slurry onto the current collector sheet.

In another embodiment, the coating part simultaneously applies the guide liquid and the electrode slurry onto the current collector sheet from a single coating die. For example, the single coating die is a dual slot die with guide liquid discharge lip and electrode slurry discharge lip formed together.

The present disclosure provides an electrode manufactured through the method for manufacturing electrode or device for manufacturing electrode described above. In one embodiment, the electrode according to the present disclosure includes a current collector and an electrode active material layer formed on one or both surfaces of the current collector. Furthermore, the electrode active material layer includes a flat part and a sliding part formed at the edge of the flat part. The sliding angle of the sliding part is within the range of 45° to 90°.

Specifically, the sliding angle of the sliding part is 30° or greater, specifically within the range of 45° to 90°, 45° to 80°, or 50° to 80°.

The present disclosure is described in more detail below with reference to the drawings. The drawings are provided to explain the present disclosure more completely to those skilled in the art. Therefore, the shapes, sizes, and numbers of components in the drawings may be exaggerated, omitted, or shown schematically for the sake of clarity. The shapes, sizes, proportions, and numbers of each component in the drawings do not necessarily fully reflect the actual shapes, sizes, proportions, and numbers of each component.

**Device for manufacturing electrode**

One aspect of the present disclosure relates to a device for manufacturing electrode.

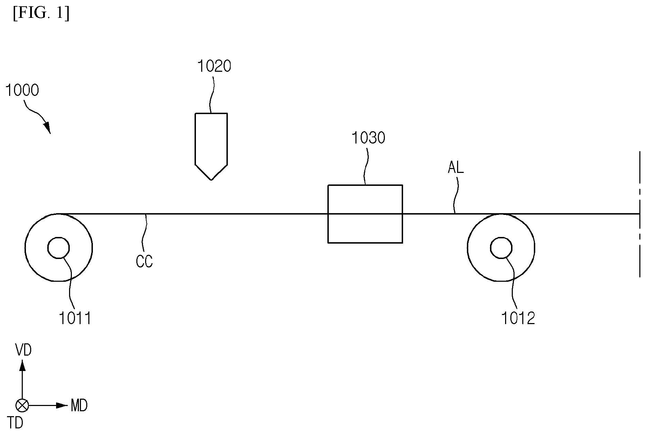

FIG. 1 is a schematic diagram illustrating a device for manufacturing electrode according to some embodiments.

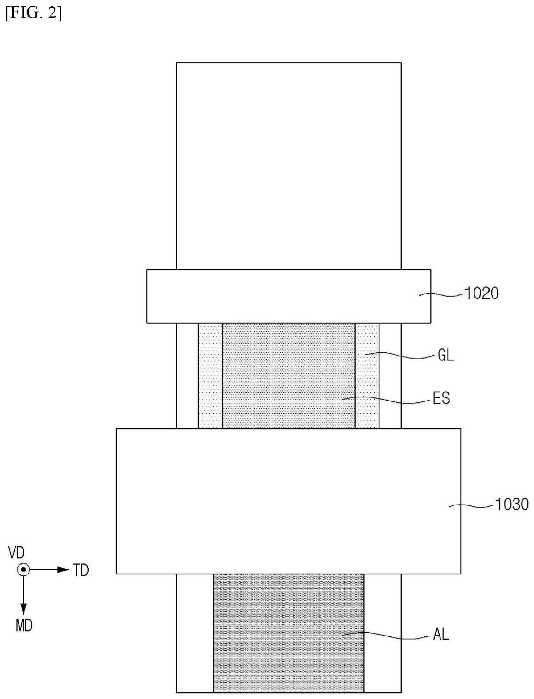

FIG. 2 is a top view of FIG. 1.

Referring to FIGS. 1 and 2, the device for manufacturing electrode 1000 may include a first roll 1011, a second roll 1012, a coating device 1020, and a drying device 1030.

The first roll 1011 can load a current collector (CC). The first roll 1011 can be configured to unwind the current collector (CC). The second roll 1012 can be configured to move the current collector (CC). The first roll 1011 and second roll 1012 shown in FIG. 1 are merely exemplary. The device for manufacturing electrode 1000 can include a plurality of rolls capable of performing a so-called roll-to-roll process.

Hereinafter, the direction of movement of the current collector (CC) is referred to as the MD (machine direction). The MD may be referred to as the longitudinal direction. Hereinafter, the direction substantially perpendicular to the MD but substantially parallel to the upper surface of the current collector (CC) is referred to as the TD (transverse direction). The TD may be referred to as the width direction. Hereinafter, the direction substantially perpendicular to both the MD and the TD is referred to as the VD (vertical direction). The VD may be referred to as the thickness direction.

The coating device 1020 may be configured to apply a guide liquid (GL) that defines the electrode slurry application region to a current collector and apply an electrode slurry (ES) to the electrode slurry application region.

In some embodiments, the coating device 1020 may include an upper die, a lower die, and a coating shim interposed between the upper die and the lower die. An insulating liquid application flow path may be formed on both sides of the coating shim.

In some embodiments, the coating device 1020 may include an upper die, a middle die, a lower die, a first coating shim interposed between the upper die and the middle die, and a second coating shim interposed between the middle die and the lower die. An insulating liquid application flow path may be formed on both sides of at least one among the first coating shim and the second coating shim.

A drying device 1030 may be configured to dry the guide liquid (GL) and the electrode slurry (ES). The drying device 1030 may be disposed downstream of the coating device 1020. The drying device 1030 may be configured to remove solvents from the guide liquid (GL) and electrode slurry (ES) or reduce the solvent content therein. The drying device 1030 may be a hot air spray device. The drying device 1030 may include a plurality of hot air spray devices differing in air temperature, air spray velocity, air spray volume, etc.

In some embodiments, the hot air spray device may include a drying oven, hot air spray nozzles, a hot air generating unit, and ducts connecting the hot air spray nozzles and the hot air generating unit.

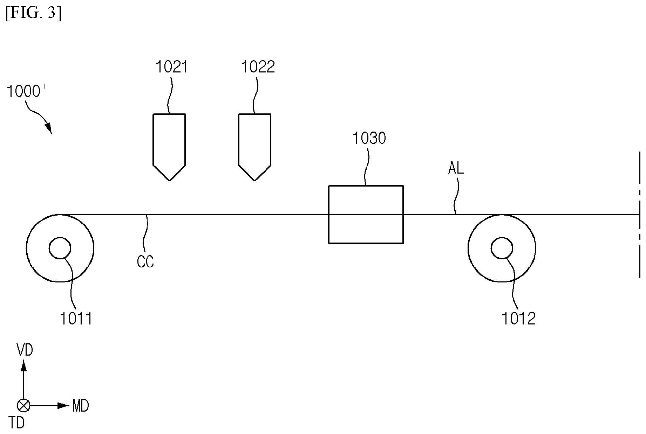

FIG. 3 is a schematic diagram showing a device for manufacturing electrode according to other embodiments.

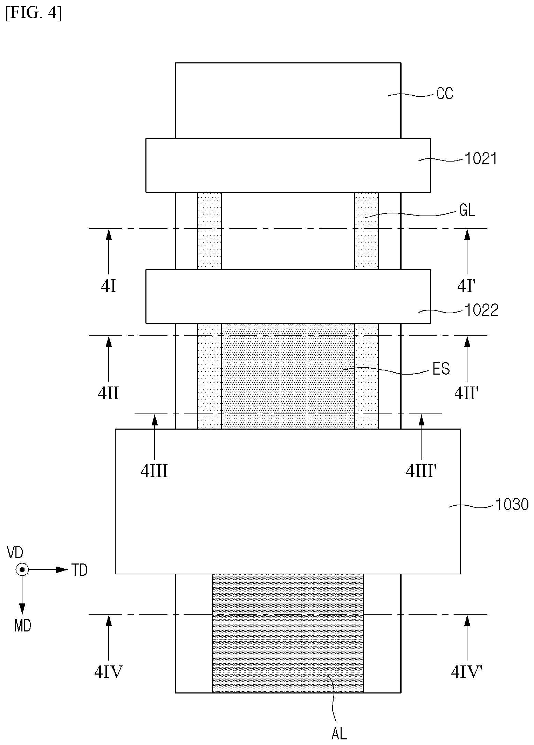

FIG. 4 is a top view of FIG. 3.

Referring to FIGS. 3 and 4, the device for manufacturing electrode 1000' may include a first roll 1011, a second roll 1012, a first coating device 1021, a second coating device 1022, and a drying device 1030.

The first coating device 1021 may be configured to apply a guide liquid (GL) onto the current collector (CC) to define an electrode slurry application region. In some embodiments, the first coating device 1021 may include an upper die, a lower die, and a coating shim interposed between the upper die and the lower die.

A second coating device 1022 may be configured to apply an electrode slurry (ES) to the electrode slurry application region. The second coating device 1022 may be disposed downstream of the first coating device 1021. In some embodiments, the second coating device 1022 may include an upper die, a lower die, and a coating shim interposed between the upper die and the lower die. In some embodiments, the second coating device 1022 may include an upper die, a middle die, a lower die, a first coating shim interposed between the upper die and the middle die, and a second coating shim interposed between the middle die and the lower die.

**Method for manufacturing electrode**

Another aspect of the present disclosure relates to a method for manufacturing an electrode.

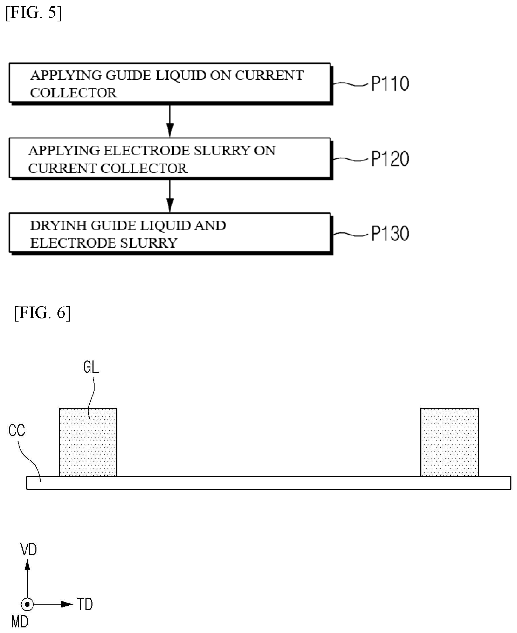

FIG. 5 is a flowchart illustrating a method for manufacturing an electrode according to some embodiments.

Referring to FIG. 5, the method for manufacturing an electrode may include a guide liquid application step P110, an electrode slurry application step P120, and a drying step P130. The method for manufacturing electrode according to some embodiments may be performed in the aforementioned device for manufacturing electrode.

In the guide liquid application step P110, the guide liquid (GL) may be applied onto the current collector (CC) to define the electrode slurry application region. FIG. 6 is a cross-sectional view taken along the section line 41-41' in FIG. 4. Referring to FIGS. 4 and 6, during the guide liquid application step P110, the guide liquid (GL) may be applied onto the current collector (CC) in two lines spaced apart by a predetermined distance in a transverse direction. Here, the region on the current collector located between the two lines may be defined as the electrode slurry application region. However, this is merely illustrative; the guide liquid (GL) may define the electrode slurry application region on the current collector (CC) in other ways. For example, the guide liquid (GL) may be applied as two lines spaced apart by a predetermined distance in machine direction on the current collector (CC), thereby defining the electrode slurry application region on the current collector (CC).

The current collector (CC) may include a conductive material that does not cause chemical changes in the final electrode. For example, the current collector (CC) may include aluminum, copper, stainless steel, nickel, titanium, or baked carbon. For example, the current collector (CC) may include aluminum, copper, and stainless steel that are surface-treated with carbon, nickel, titanium, silver, etc. The surface of the current collector (CC) may have a micro-irregular structure formed to enhance adhesion with the electrode active material layer. The shape of the current collector (CC) may be a sheet, film, foil, net, porous body, foam, or nonwoven fabric. The thickness of the current collector (CC) may be in the range of about 3 $\mu$m to about 500 $\mu$m.

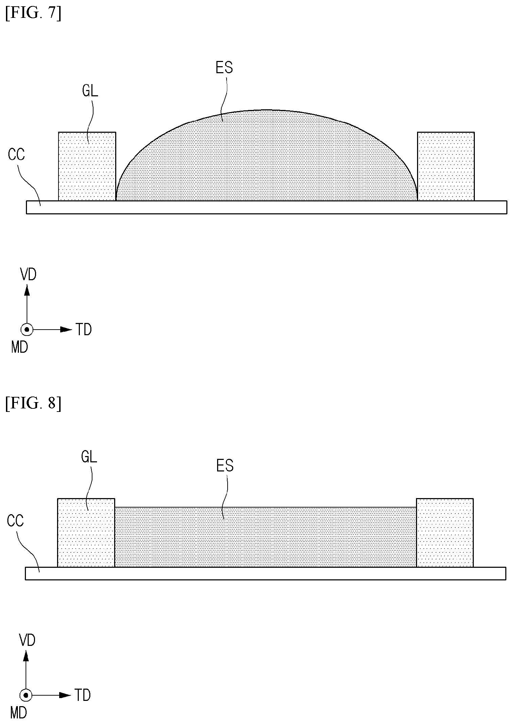

In the electrode slurry application step P120, the electrode slurry (ES) may be applied onto the electrode slurry application region. FIG. 7 is a cross-sectional view taken along the section line 4II-4II' in FIG. 4. FIG. 8 is a cross-sectional view taken along the section line 4III-4III' in FIG. 4. Referring to FIGS. 4, 7, and 8, in the electrode slurry application step P120, the electrode slurry (ES) may be applied between two lines formed by the guide liquid (GL).

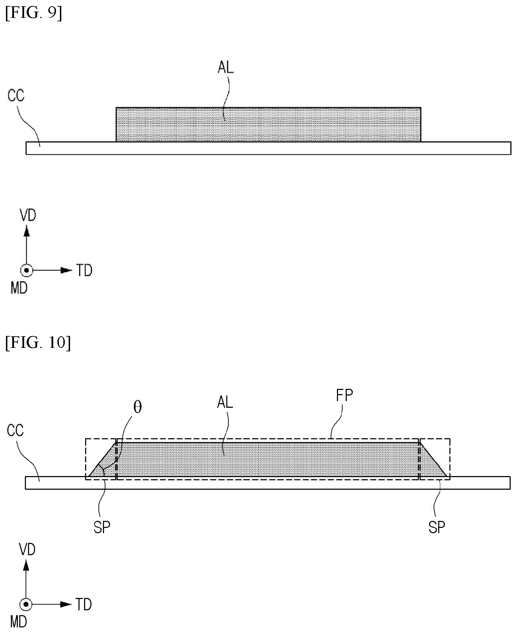

During the drying step P130, the guide liquid (GL) and the electrode slurry (ES) can be dried. During the drying step P130, the solvent within the guide liquid (GL) and the electrode slurry (ES) can be removed. FIG. 9 is a cross-sectional view taken along the section line 4IV-4IV' in FIG. 4. Referring to FIGS. 4 and 9, during the drying step P130, the guide liquid (GL) and the electrode slurry (ES) can be integrated into the electrode active material layer (AL). The temperature and duration of the drying step P130 can be determined considering the boiling point of the solvent in the guide liquid (GL) and electrode slurry (ES) and the amount of solvent present. As a non-limiting example, the drying step P130 can be performed at a temperature of approximately 100 to 300°C for approximately 30 to 150 seconds.

Referring to FIGS. 6 through 9, the method of manufacturing an electrode according to some embodiments is described, showing how it improves the electrode edge profile. The profile of the guide liquid (GL) can be maintained similar to when the guide liquid (GL) was initially applied to the current collector (CC) prior to the drying step P130. The guide liquid (GL) can mitigate the tendency of the electrode slurry (ES) to spread into TD. Consequently, the edge profile of the electrode formed after the drying step P130 can be improved. Here, the guide liquid (GL) evaporates by 85 to 95 wt% during the drying step P130. That is, the guide liquid (GL) is mostly evaporated during the drying step P130. Therefore, the conductivity of the finally manufactured electrode can be excellent.

In some embodiments, the guide liquid (GL) may include a solvent and a binder.

The solvent can be almost entirely evaporated during the drying step P130. The solvent may include one or more among dimethyl sulfoxide, isopropyl alcohol, N-methylpyrrolidone, acetone, methyl acetate, ethyl acetate, $\gamma$-butyrolactone, $\varepsilon$-caprolactone, dibutyl ether, tetrahydrofuran, cyclohexanone, benzene, fluorobenzene, dimethyl carbonate, diethyl carbonate, methyl ethyl carbonate, ethyl methyl carbonate, ethylene carbonate, propylene carbonate, and water. As a specific example, the solvent may be N-methylpyrrolidone. As a specific example, the solvent may be a mixture of N-methylpyrrolidone and ethylene carbonate or a mixture of N-methylpyrrolidone and propylene carbonate. The solvent may be selected considering the viscosity of the guide liquid (GL). The content of the solvent in the guide liquid (GL) may be selected considering the viscosity of the guide liquid (GL). In some embodiments, the guide liquid (GL) may contain 85 wt% or more, or 85 to 95 wt% of the solvent. In some embodiments, the guide liquid (GL) may contain 86 wt% or more, 87 wt% or more, 88 wt% or more, 89 wt% or more, 90 wt% or more, 91 wt% or more, 92 wt% or more, 93 wt% or more, or 94 wt% or more of the solvent. In some embodiments, the guide liquid (GL) may contain 94 wt% or less, 93 wt% or less, 92 wt% or less, 91 wt% or less, 90 wt% or less, 89 wt% or less, 88 wt% or less, 87 wt% or less, or 86 wt% or less of solvent.

The binder may increase the viscosity of the guide liquid (GL). The binder may include one or more among polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, ethylene-propylene-diene terpolymer, sulfonated ethylene-propylene-diene terpolymer, styrene-butadiene rubber, and styrene-butadiene rubber-carboxymethyl cellulose fluororubber. As a specific example, the binder may be polyvinylidene fluoride. The binder may be selected considering the viscosity of the guide liquid (GL). The content of the binder in the guide liquid (GL) may be selected considering the viscosity of the guide liquid (GL). In some embodiments, the guide liquid (GL) may contain the binder at 5 to 15 wt%. In some embodiments, the guide liquid (GL) may contain 6 wt% or more, 7 wt% or more, 8 wt% or more, 9 wt% or more, 10 wt% or more, 11 wt% or more, 12 wt% or more, 13 wt% or more, or 14 wt% or more of binder. In some embodiments, the guide liquid (GL) may contain a binder of 14 wt% or less, 13 wt% or less, 12 wt% or less, 11 wt% or less, 10 wt% or less, 9 wt% or less, 8 wt% or less, 7 wt% or less, or 6 wt% or less.

In some embodiments, the guide liquid (GL) may comprise a solvent and a binder. The description of the solvent and the binder is the same as described above. In some embodiments, the guide liquid (GL) may not include inorganic particles. Accordingly, inorganic particles may not remain on the current collector after the drying step P130, thereby preventing a reduction in the conductivity of the electrode. As non-limiting examples, the inorganic particles may be one or more of $AlO(OH)$, $Al_2O_3$, $Al(OH)_3$, $SiO_2$, $TiO_2$, $SnO_2$, $CeO_2$, $MgO$, $NiO$, $CaO$, $ZnO$, $ZrO_2$, $Y_2O_3$, $SrTiO_3$, $BaTiO_3$, and $Mg(OH)_2$.

The viscosity of the guide liquid (GL) may be determined considering factors such as the viscosity of the electrode slurry (ES) and the time interval between the initiation time of the guide liquid application step P110 and the completion time of the drying step P130. For example, a higher viscosity of the electrode slurry (ES) may increase the viscosity of the guide liquid (GL). For instance, the longer the time interval between the start time of the guide liquid application step P110 and the completion time of the drying step P130, the higher the viscosity of the guide liquid (GL) can be increased. If the viscosity of the guide liquid (GL) is too low relative to the viscosity of the electrode slurry (ES), the guide liquid (GL) may not sufficiently mitigate the tendency of the electrode slurry (ES) to spread toward the TD.

In some embodiments, the electrode slurry (ES) may be a positive electrode slurry. The viscosity of the positive electrode slurry, measured at 25°C and a shear rate of 2.5/s, may be in the range of 5,000 to 30,000 cps. In this case, the viscosity of the guide liquid (GL), measured at 25°C and a shear rate of 2.5/s, may be controlled to be lower than the viscosity of the positive electrode slurry.

In some embodiments, the electrode slurry (ES) may be a negative electrode slurry. The viscosity of the negative electrode slurry measured at 25°C with a shear rate of 2.5/s may be in the range of 2000 to 6000 cps. In this case, the viscosity of the guide liquid (GL) measured at 25°C and a shear rate of 2.5/s can be controlled to be lower than the viscosity of the negative electrode slurry.

The electrode slurry (ES) may include an electrode active material, a solvent, a binder, and a conductive material. The electrode active material may be a posiitve electrode active material or a negative electrode active material.

The positive electrode active material may include one or more among lithium-iron oxide (e.g., $LiFePO_4$), lithium-manganese oxide (e.g., $LiMnO_2$, $LiMn_2O_4$), lithium-cobalt oxide (e.g., $LiCoO_2$), lithium-nickel oxide (e.g., $LiNiO_2$), lithium-nickel-manganese oxide (e.g., $LiNi_{1-y1}Mn_{y1}O_2$ (where 0<y1<1) and $LiMn_{2-z1}Ni_{z1}O_4$ (where 0 < z1 < 2)), lithium-nickel-cobalt oxide (e.g., $LiNi_{1-y2}Co_{y2}O_2$ (where 0<y2<1), etc.), lithium-manganese-cobalt oxide (e.g., $LiCo_{1-y3}Mn_{y3}O_2$ (where 0<y3<1) and $LiMn_{2-z2}Co_{z2}O_4$ (where 0 < z2 < 2), etc.), lithium-nickel-manganese-cobalt oxide (e.g., $Li(Ni_{p1}Co_{q1}Mn_{r1})O_2$ (where 0 < p1 < 1, 0 < q1 < 1, 0 < r1 < 1, p1+q1+r1=1), $Li(Ni_{p2}Co_{q2}Mn_{r2})O_4$ (where 0 < p2 < 2, 0 < q2 < 2, 0 < r2 < 2, p2 + q2 + r2 = 2), etc.) and lithium-nickel-cobalt-metal (M) oxide (e.g., $Li(Ni_{p3}Co_{q3}Mn_{r3}M_{s1})O_2$ (where M is selected from the group consisting of Al, Cu, Fe, V, Cr, Ti, Zr, Zn, Ta, Nb, Mg, B, W, and Mo, and p3, q3, r3, and s1 are the atomic fractions of the respective independent elements, where 0 < p3 < 1, 0 < q3 < 1, 0 < r3 < 1, 0 < s1 < 1, and p3+q3+r3+s1=1).

The negative electrode active material may include one or more among lithium metal; graphite-based carbon materials such as natural or synthetic graphite in amorphous, flake, lamellar, spherical, or fibrous forms; amorphous carbon materials such as soft carbon and hard carbon; metals such as Cu, Ni, Na, K, Rb, Cs, Fr, Be, Mg, Ca, Sr, Si, Sb, Pb, In, Zn, Ba, Ra, Ge, Al, and Sn, or alloys of these metals with lithium; $PbO$, $PbO_2$, $Pb_2O_3$, $Pb_3O_4$, $Sb_2O_3$, $Sb_2O_4$, $Sb_2O_5$, $GeO$, $GeO_2$, $Bi_2O_3$, $Bi_2O_4$, $Bi_2O_5$, $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, Group 1, 2, 3 elements of the periodic table, halogens; $0 < x \leq 1$; $1 \leq y \leq 3$; $1 \leq z \leq 8$); Si, $SiO_x$ ($0 < x \leq 2$), Si-Y alloys (where Y is an element selected from the group consisting of alkali metals, alkaline earth metals, Group 13 elements, Group 14 elements, transition metals, rare earth elements, and combinations thereof, and Si is excluded), Sn, $SnO_2$, Sn-Y (where Y is an element selected from the group consisting of alkali metals, alkaline earth metals, group 13 elements, group 14 elements, transition metals, rare earth elements, and combinations thereof, and is not Sn), or more than one thereof.

The solvent may include one or more among dimethyl sulfoxide, isopropyl alcohol, N-methylpyrrolidone, acetone, methyl acetate, ethyl acetate, $\gamma$-butyrolactone, $\varepsilon$-caprolactone, dibutyl ether, tetrahydrofuran, cyclohexanone, benzene, fluorobenzene, dimethyl carbonate, diethyl carbonate, methyl ethyl carbonate, ethyl methyl carbonate, ethylene carbonate, propylene carbonate, and water.

The binder may include one or more among polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, ethylene-propylene-diene terpolymer, sulfonated ethylene-propylene-diene terpolymer, styrene-butadiene rubber, and styrene-butadiene rubber-carboxymethyl cellulose fluororubber.

The conductive material may include one or more among carbon nanotubes; graphite; carbon-based materials such as carbon black, acetylene black, ketjen black, channel black, furnace black, lamp black, and thermal black; conductive fibers such as carbon fibers or metal fibers; metal powders such as fluorocarbon, aluminum, and nickel powder; conductive whiskers such as zinc oxide and potassium titanate; conductive metal oxides such as titanium oxide; and polyphenylene.

In some embodiments, the time interval between the initiation time of the guide liquid application step P110 and the initiation time of the drying step P130 may be within a range of approximately 300 seconds or less. The solid content of the guide liquid (GL) is lower than that of the electrode slurry (ES). Therefore, it may be desirable for the guide liquid (GL) to dry as quickly as possible after being applied to the current collector (CC) to maintain a profile similar to when it was first applied and to mitigate the tendency of the electrode slurry (ES) to spread into the TD. In some embodiments, the time interval between the start time of the guide liquid application step P110 and the start time of the drying step P130 may be approximately 5 seconds or more, or approximately 30 seconds or more. In some embodiments, the time interval between the start time of the guide liquid application step P110 and the start time of the drying step P130 may be approximately 240 seconds or less, or approximately 180 seconds or less.

In some embodiments, the time interval between the start time of the guide liquid application step P110 and the start time of the electrode slurry application step P120 may be 3 seconds or less. The guide liquid application step P110 and the electrode slurry application step P120 may be performed almost simultaneously in a single coating device. For example, the guide liquid application step P110 and the electrode slurry application step P120 may be performed almost simultaneously in the coating device 1020.

In some embodiments, the time interval between the start time of the guide liquid application step P110 and the start time of the electrode slurry application step P120 may exceed approximately 3 seconds and be 20 seconds or less. The guide liquid application step P110 and the electrode slurry application step P120 may be performed in separate coating devices. For example, the guide liquid application step P110 may be performed in a first coating device 1021, and the electrode slurry application step P120 may be performed in a second coating device 1022.

**Electrode**

Another aspect of the present disclosure relates to an electrode.

FIG. 10 is a schematic diagram showing an electrode according to some embodiments. Referring to FIG. 10, the electrode may include a current collector (CC) and an electrode active material layer (AL). The electrode according to some embodiments may be manufactured by the aforementioned method for manufacturing electrode.

The electrode active material layer (AL) may include a flat part (FP) and a sliding part (SP).

The flat part (FP) refers to a portion within the electrode active material layer (AL) where the thickness is maintained at a constant level, having a thickness similar to the target thickness. Here, maintaining a constant thickness may mean that the thickness deviation is within a range of approximately ±3%. The target thickness refers to the thickness of the electrode active material layer (AL) targeted during electrode manufacturing. Having a thickness similar to the target thickness may mean that the thickness differs from the target thickness by less than ±1%.

The sliding part (SP) refers to a portion of the electrode active material layer (AL) where the thickness gradually decreases toward the width-direction end. However, any part of the electrode active material layer (AL) where the thickness is less than approximately 5% of the average thickness of the flat part (FP) is not included in the sliding part (SP). The sliding part (SP) is formed at the edge of the flat part (FP).

The angle of the sliding part (SP) relative to the current collector (CC) is referred to as the sliding angle ($\theta$). The sliding angle ($\theta$) can be measured by simplifying the cross-section of the electrode into an isosceles trapezoid, as shown in FIG. 10. At this time, the flat part (FP) can be simplified into a rectangular shape, and the sliding part (SP) can be simplified into a right-angled triangular shape. The length of the short side of the rectangle can be substantially equal to the average thickness of the flat part (FP). When simplifying the sliding part (SP) as a right triangle, the thickness of the thinnest part of the sliding part (SP) (or the part having a thickness of approximately 5% of the average thickness of the flat part (FP)) can be assumed to be zero, and the hypotenuse of the right triangle can be drawn.

In some embodiments, the sliding angle ($\theta$) may be in the range of 45° to 90°. In some embodiments, the sliding angle ($\theta$) may be in the range of 60° to 90°. In some embodiments, the sliding angle ($\theta$) may be in the range of 75° to 90°.

[Mode for Carrying out the Invention]

The following describes the examples in comparison with the comparative examples.

**Examples 1 to 5 and Comparative Example 1**

A guide liquid containing N-methylpyrrolidone and polyvinylidene fluoride was prepared. The content of N-methylpyrrolidone and polyvinylidene fluoride and the viscosity of the guide liquid are shown in Table 1 below.

A positive electrode slurry was prepared by adding 97 wt% lithium-nickel-manganese-cobalt oxide, 1.5 wt% polyvinylidene fluoride, and 1.5 wt% carbon nanotubes to N-methylpyrrolidone and mixing. The viscosity of the positive electrode slurry was approximately 7,000 cps.

The guide liquid was applied onto a current collector, followed by application of the positive electrode slurry, and then dried to prepare the positive electrode. Comparative Example 1 is a case where no guide liquid was used.

**Examples 6 to 10 and Comparative Example 2**

A guide liquid containing N-methylpyrrolidone and polyvinylidene fluoride was prepared. The content of N-methylpyrrolidone and polyvinylidene fluoride and the viscosity of the guide liquid are shown in Table 1 below.

96 wt% of graphite, 3 wt% of SBR-CMC, and 1 wt% of carbon black were added to water and mixed to prepare a negative electrode slurry. The viscosity of the negative electrode slurry was approximately 4,000 cps.

The guide liquid was applied onto a current collector, followed by application of the negative electrode slurry, and then dried to prepare the negative electrode. Comparative Example 2 is a case where no guide liquid was used.

**Sliding angle measurement**

The sliding angles of the electrodes according to Examples 1 to 10 and Comparative Examples 1 to 2 were measured. The measurement results are shown in Tables 1 and 2 below.

[Table 1]

|  | Comparative example 1 | Example 1 | Example 2 | Example 3 | Example 4 | Example 5 |
|---|---|---|---|---|---|---|
| N-methylpyrrolid one content (wt%) | - | 99 | 95 | 90 | 85 | 78 |
| Polyvinylidene fluoride content (wt%) | - | 1 | 5 | 10 | 15 | 22 |
| Guide liquid viscosity (cps) | - | 165 | 698 | 2,142 | 3,851 | 7,463 |
| Sliding angle (°) | 32 | 38 | 51 | 66 | 76 | 73 |

[Table 2]

|  | Comparative example 2 | Example 6 | Example 7 | Example 8 | Example 9 | Example 10 |
|---|---|---|---|---|---|---|
| N-methylpyrrolid one content (wt%) | - | 99 | 95 | 90 | 85 | 78 |
| Polyvinylidene fluoride content (wt%) | - | 1 | 5 | 10 | 15 | 22 |
| Guide liquid viscosity (cps) | - | 165 | 698 | 2,142 | 3,851 | 7,463 |
| Sliding angle (°) | 27 | 32 | 46 | 62 | 77 | 74 |

Referring to Tables 1 and 2, it can be seen that the electrodes of Examples 1 to 10 using the guide liquid control the sliding angle to a certain level. For the positive electrode, while the sliding angle of Comparative Example 1, which did not use the guide liquid, is around 32°, Examples 1 to 5 are controlled to be higher than that. Specifically, in Examples 2 to 4, where the binder content was 5 wt% or higher, the sliding angle was controlled within the range of 51 to 76°. However, in Example 5, where the binder content was 22 wt%, the sliding angle actually decreased compared to Example 4, likely due to the excessive viscosity of the guide liquid. Furthermore, Example 5 revealed a limit where the volatilization rate of the guide liquid decreased.

For the negative electrode, Comparative Example 2, which did not use a guide liquid, had a sliding angle of around 27°, whereas Examples 6 to 10 were controlled at higher angles. Specifically, in Examples 7 to 9, where the binder content was 5 wt% or higher, the sliding angle was controlled within the range of 46 to 77°. However, in Example 10, where the binder content was 22 wt%, the sliding angle decreased compared to Example 9 as the viscosity of the guide liquid became excessive. Furthermore, Example 10 revealed a limit where the volatilization rate of the guide liquid decreased.

**Measurement of electrode conductivity**

The interface resistance between the electrode active material layer and the current collector was measured for the manufactured electrode samples using an electrode resistance measurement system (Hioki, RM2610). Specifically, the resistance was compared and measured for electrode samples according to Example 2 and Example 5. The measurement results confirmed that the resistance of the electrode sample in Example 5 was approximately 32% higher than that in Example 2. This is understood to be due to the increased electrode resistance in Example 5 caused by the increased binder components remaining on the current collector.

The above description is merely illustrative of the present disclosure. The scope of the present disclosure should be interpreted in accordance with the claims, and all technical ideas within the scope of the claims, including those equivalent or uniform to the claims, should be interpreted as falling within the scope of the present disclosure.

[Description of Reference Numerals]

1000, 1000': DEVICE FOR MANUFACTURING ELECTRODE

1011: FIRST ROLL

1012: SECOND ROLL

1020: COATING DEVICE

1021: FIRST COATING DEVICE

1022: SECOND COATING DEVICE

1030: DRYING DEVICE

GL: GUIDE LIQUID

ES: ELECTRODE SLURRY

AL: ELECTRODE ACTIVE MATERIAL LAYER

CC: CURRENT COLLECTOR

FP: FLAT PART

SP: SLIDING PART

$\Theta$: SLIDING ANGLE

**Claims**

**1.** A method for manufacturing electrode comprising:

a guide liquid application step of applying a guide liquid defining an electrode slurry application region on a current collector sheet;
an electrode slurry application step of applying electrode slurry onto the electrode slurry application region defined by the guide liquid; and
a drying step of drying the guide liquid and the electrode slurry applied on the current collector sheet, wherein the guide liquid evaporates by at least 85 wt% during the drying step.

2. The method for manufacturing electrode of claim 1, wherein
the guide liquid comprises a solvent and a binder.

3. The method for manufacturing electrode of claim 2, wherein
the solvent comprises one or more among dimethyl sulfoxide, isopropyl alcohol, N-methylpyrrolidone, acetone, methyl acetate, ethyl acetate, γ-butyrolactone, ε-caprolactone, dibutyl ether, tetrahydrofuran, cyclohexanone, benzene, fluorobenzene, dimethyl carbonate, diethyl carbonate, ethyl methyl carbonate, ethylene carbonate, propylene carbonate, and water.

4. The method for manufacturing electrode of claim 2, wherein
the binder comprises one or more among polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, ethylene-propylene-diene terpolymer, sulfonated ethylene-propylene-diene terpolymer, styrene-butadiene rubber, and styrene-butadiene rubber-carboxymethyl cellulose fluororubber.

5. The method for manufacturing electrode of claim 1, wherein

the method for manufacturing electrode is a method for manufacturing positive electrode, wherein
the electrode slurry is a positive electrode slurry, and satisfies the following Equation 1:

[Equation 1]

$$150 \leq Vs1 - Vg1 \leq 7,000$$

In Equation 1,

Vs1 represents the viscosity of the positive electrode slurry measured at 25°C with a shear rate of 2.5/s, and is in the range of 5,000 to 30,000 cps,
Vg1 represents the viscosity (cps) of the guide liquid measured at 25°C with a shear rate of 2.5/s.

6. The method for manufacturing electrode of claim 1, wherein

the method for manufacturing electrode is a method for manufacturing negative electrode, wherein
the electrode slurry is a negative electrode slurry, and satisfies the following Equation 2:

[Equation 2]

$$100 \leq Vs2 - Vg2 \leq 4,500$$

In Equation 2,

Vs2 represents the viscosity of the negative electrode slurry measured at 25°C with a shear rate of 2.5/s, and is in the range of 2,000 to 6,000 cps,
Vg2 represents the viscosity (cps) of the guide liquid measured at 25°C with a shear rate of 2.5/s.

7. The method for manufacturing electrode of claim 1, wherein
the time interval (|T1-T3|) between the start time (T1) of the guide liquid application step and the completion time (T3) of the drying step is within the range of 300 seconds or less.

8. The method for manufacturing electrode of claim 1, wherein

the time interval (|T1-T2|) between the start time (T1) of the guide liquid application step and the start time (T2) of the electrode slurry application step is 3 seconds or less.

9. The method for manufacturing electrode of claim 1, wherein
the time interval (|T1-T2|) between the start time (T1) of the guide liquid application step and the start time (T2) of the electrode slurry application step is more than 3 seconds and 20 seconds or less.

10. A device for manufacturing electrode comprising:

a coating part that applies a guide liquid that defines an electrode slurry application region on a current collector sheet and applies an electrode slurry to the electrode slurry application region; and
a drying part that dries the guide liquid and the electrode slurry, wherein
the viscosity of the guide liquid is controlled to be lower than the viscosity of the electrode slurry.

11. The device for manufacturing electrode of claim 10, wherein

the coating part comprises a first coating die and a second coating die, wherein
the first coating die applies the guide liquid onto the current collector sheet, wherein
the second coating die applies the electrode slurry onto the current collector sheet.

12. The device for manufacturing electrode of claim 10, wherein

the coating part comprises a single coating die, wherein
the single coating die simultaneously applies the guide liquid and the electrode slurry onto the current collector sheet.

13. An electrode comprising:

a current collector and an electrode active material layer formed on one or both surfaces of the current collector, wherein
the electrode active material layer comprises a flat part and a sliding part formed at the edge of the flat part, wherein
the sliding angle of the sliding part is within the range of 45° to 90°.

[FIG. 1]

1000

1020

1030

AL

1011

CC

1012

VD

MD

TD

[FIG. 2]

[FIG. 3]

[FIG. 4]

[FIG. 5]

```
┌─────────────────────────────────────┐
│ APPLYING GUIDE LIQUID ON CURRENT     │──── P110
│ COLLECTOR                            │
└─────────────────────────────────────┘
                 │
                 ▼
┌─────────────────────────────────────┐
│ APPLYING ELECTRODE SLURRY ON         │──── P120
│ CURRENT COLLECTOR                    │
└─────────────────────────────────────┘
                 │
                 ▼
┌─────────────────────────────────────┐
│ DRYINH GUIDE LIQUID AND              │──── P130
│ ELECTRODE SLURRY                     │
└─────────────────────────────────────┘
```

[FIG. 6]

[FIG. 7]

[FIG. 8]

[FIG. 9]

[FIG. 10]

## INTERNATIONAL SEARCH REPORT

| International application No. |
| --- |
| **PCT/KR2025/007848** |

### A. CLASSIFICATION OF SUBJECT MATTER

**H01M 4/04**(2006.01)i; **B05D 1/36**(2006.01)i; **B05D 5/00**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/04(2006.01); B05C 5/02(2006.01); B05C 9/14(2006.01); H01M 10/052(2010.01); H01M 4/13(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 슬라이딩부(sliding portion), 휘발성 가이드 액(volatile guide liquid), 증발(evaporation), 전극(electrode), 건조(dry), 점도(viscosity), 코팅(coating)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2023-0106989 A (LG ENERGY SOLUTION, LTD.) 14 July 2023 (2023-07-14) paragraphs [0036], [0038], [0049]-[0053], [0069]-[0073]; figure 1 | 13 |
| A | | 1-12 |
| X | KR 10-2022-0057303 A (LG ENERGY SOLUTION, LTD.) 09 May 2022 (2022-05-09) paragraphs [0027], [0028], [0030], [0054]-[0058], [0060]-[0062]; figure 5 | 13 |
| X | KR 10-2021-0122992 A (LG ENERGY SOLUTION, LTD.) 13 October 2021 (2021-10-13) paragraphs [0025], [0027], [0030]-[0039], [0061], [0062]; figure 2 | 13 |
| X | KR 10-2021-0083512 A (LG ENERGY SOLUTION, LTD.) 07 July 2021 (2021-07-07) paragraphs [0019], [0020], [0059]-[0061]; figure 4 | 13 |
| A | KR 10-2020-0088662 A (LG CHEM, LTD.) 23 July 2020 (2020-07-23) entire document | 1-13 |

☐ Further documents are listed in the continuation of Box C. ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **22 September 2025** | **23 September 2025** |

| Name and mailing address of the ISA/KR | Authorized officer |
| --- | --- |
| **Korean Intellectual Property Office** <br> **Government Complex-Daejeon Building 4, 189 Cheongsaro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/007848**

| Patent document cited in search report | | | Publication date (day/month/year) | Patent family member(s) | | | Publication date (day/month/year) |
|---|---|---|---|---|---|---|---|
| KR | 10-2023-0106989 | A | 14 July 2023 | CN | 116802829 | A | 22 September 2023 |
| | | | | EP | 4266401 | A1 | 25 October 2023 |
| | | | | JP | 2024-505452 | A | 06 February 2024 |
| | | | | JP | 7658670 | B2 | 08 April 2025 |
| | | | | US | 2024-0088453 | A1 | 14 March 2024 |
| | | | | WO | 2023-132531 | A1 | 13 July 2023 |
| KR | 10-2022-0057303 | A | 09 May 2022 | None | | | |
| KR | 10-2021-0122992 | A | 13 October 2021 | KR | 10-2834733 | B1 | 15 July 2025 |
| KR | 10-2021-0083512 | A | 07 July 2021 | CN | 113543896 | A | 22 October 2021 |
| | | | | EP | 3928878 | A1 | 29 December 2021 |
| | | | | JP | 2022-521016 | A | 04 April 2022 |
| | | | | JP | 7442541 | B2 | 04 March 2024 |
| | | | | KR | 10-2024-0119035 | A | 06 August 2024 |
| | | | | KR | 10-2772911 | B1 | 27 February 2025 |
| | | | | US | 11951508 | B2 | 09 April 2024 |
| | | | | US | 2022-0331832 | A1 | 20 October 2022 |
| | | | | WO | 2021-132992 | A1 | 01 July 2021 |
| KR | 10-2020-0088662 | A | 23 July 2020 | KR | 10-2025-0041608 | A | 25 March 2025 |

Form PCT/ISA/210 (patent family annex) (July 2022)

## EP 4 769 499 A1

**Patent documents cited in the description**

- KR 1020240074674